# EUROPÄISCHE PATENTSCHRIFT

(11) **EP 1 111 249 B1**
(45) Veröffentlichungstag und Bekanntmachung des Hinweises auf die Patenterteilung: **10.05.2006**
(21) Anmeldenummer: 00122711.5
(22) Anmeldetag: 18.10.2000
(51) Int. Cl.: F16B 2/06

(54) **Klemmvorrichtung**
Clamping device
Dispositif de serrage

(30) Priorität: 21.12.1999 DE 19961827
(43) Veröffentlichungstag der Anmeldung: 27.06.2001
(73) Patentinhaber: SICK AG, 79183 Waldkirch, Breisgau (DE)
(72) Erfinder: Jaksic, Davorin, 79211 Denzlingen (DE)
(74) Vertreter: Manitz, Finsterwald & Partner GbR

(56) Entgegenhaltungen:
- EP-A- 0 732 514
- DE-A- 3 604 877
- DE-C- 515 506
- FR-A- 2 630 505
- US-A- 2 854 723

## Beschreibung

Die Erfindung betrifft eine Kombination aus einer im wesentlichen U-förmigen Klemmvorrichtung und einem Gegenstand zum Befestigen und Justieren des Gegenstands nach dem Oberbegriff des Patentanspruchs 1.

In der Automatisierungstechnik ist es häufig erforderlich, Sensoren am Einsatzort in einer bestimmten Position zu halten, wobei der Sensor exakt auf den zu erfassenden Bereich oder das zu erfassende Tastobjekt ausgerichtet ist. Dazu sind bereits spezielle Klemmvorrichtungen für Sensoren bekannt, die jedoch aus vielen Einzelteilen bestehen und damit teuer in der Herstellung sowie aufwendig zu montieren sind. Bekannte Klemmvorrichtungen mit einfacherem Aufbau, haben den Nachteil, daß deren Befestigung nur an Bauteilen mit bestimmten Abmessungen möglich ist.

Die DE 515 506 beschreibt eine Schelle zur Befestigung von Schildern an einem Rohr mit einem an einer Seite offenen Schellenkörper, der aus einem Scheitelbereich mit einer Gewindebohrung und einer darin eingedrehten Schraube sowie zwei sich an den Körper anschließenden konischen Schenkeln mit Umwinklungen besteht. Diese sind jeweils mit Löchern zur Aufnahme von Bolzen versehen, die Hinterschneidungen zur Aufnahme von Rändern von in den Schildern vorgesehenen Bohrungen aufweisen. Durch Anziehen der Schraube bei auf das Rohr aufgesteckter Schelle werden die konischen Schenkel der Schelle durch das Rohr auseinandergespreizt, wodurch sich die Bolzen an den Schenkeln voneinander entfernen und deren Hinterschneidungen bei auf die Bolzen aufgeschobenem Schild mit den Bohrungsrändern des Schildes in Eingriff gelangen und das Schild schließlich fest verklemmen.

Diese Vorrichtung hat den Nachteil, daß die Lage eines zu befestigenden Gegenstandes nur entlang des Rohres und um das Rohr herum justiert werden kann.

Die Erfindung hat daher die Aufgabe, die Klemmvorrichtung der DE 515 506 derart weiterzubilden, daß sie erweiterte Verstellmöglichkeiten bietet.

Diese Aufgabe wird durch die Merkmale des kennzeichnenden Teils des Patentanspruchs 1 gelöst.

Eine solche Klemmvorrichtung hat den Vorteil, daß sie aufgrund der integralen Verbindung ihrer Befestigungsschenkel im wesentlichen nur aus einem einzigen Teil besteht. Dadurch ist die erfindungsgemäße Klemmvorrichtung kostengünstig herzustellen und leicht zu montieren. Darüber hinaus erlaubt das Zusammenwirken der Ausnehmung zwischen den Schenkeln mit dem in die Ausnehmung einführbaren Fixierelement eine Befestigung der Klemmvorrichtung gemäß der Erfindung an Bauteilen mit unterschiedlichen Abmessungen.

Für eine einfache Montage ist es wichtig, daß die Klemmvorrichtung und die den Sensor haltenden Haltemittel so ausgebildet sind, daß mittels eines einzigen Fixierelementes, das insbesondere als Arretierschraube ausgebildet ist, sowohl die Klemmvorrichtung mit den Haltemitteln des Sensors als auch die Klemmvorrichtung mit der Halterung, insbesondere der Haltestange fest verbunden werden kann. Bei noch nicht voll festgezogenem Fixierelement ist dabei zwecks genauer Justierung eine Verschwenkung des Sensors um zwei senkrecht aufeinanderstehende Achsen sowie eine Verschiebung entlang der Halterung möglich.

Ein weiterer Vorteil besteht darin, daß die Hinterschneidungen durch federndes Zusammendrücken der beiden Schenkel in Öffnungen der Haltemittel für den Sensor eingeführt werden können, worauf durch Verminderung des Druckes auf die Schenkel diese sich federnd spreizen und so die Hinterschneidungen in einen vorläufigen Halteeingriff mit den Haltemitteln des Sensors gebracht werden, der nach Justierung durch Festziehen des Fixierelementes zu einem endgültigen, festen Halteeingriff wird.

Eine vorteilhafte Ausbildung des Fixierelementes als Arretierschraube entnimmt man aus Anspruch 2.

Anspruch 3 kennzeichnet eine Ausführungsform, die das In-Eingriff-Bringen der Hinterschneidungen mit den Haltemitteln des Sensors von Hand ermöglicht.

Eine bevorzugte Ausbildung des Haltemittels für den Sensor ist durch Anspruch 4 gekennzeichnet.

Aufgrund der Ausbildung nach Anspruch 5 kann die erfindungsgemäße Kombination an Stangen sehr unterschiedlichen Durchmessers befestigt werden.

Weitere vorteilhafte Ausführungsformen sind durch die Ansprüche 6 bis 9 gekennzeichnet.

Die Ausführungsform nach Anspruch 10 ermöglicht eine besonders feste Verbindung zwischen der Klemmvorrichtung und den Haltemitteln des Sensors.

Aufgrund der Maßnahme nach Anspruch 11 wird das Zusammendrücken der beiden Schenkel beim Einführen in die Öffnung der Befestigungsplatte begünstigt.

Die Öffnung des Gegenstandes bzw. des Haltemittels ist beispielsweise in einer Befestigungsplatte vorgesehen, die an einem zu befestigenden Sensor angeordnet ist. Die Befestigungsplatte ist vorzugsweise auf einer Seite des Sensors angeordnet und so ausgebildet, daß sie seitlich etwas über die Kontur des Sensors einschließlich eines Kabelanschlusses übersteht. Eine zweite, identische Befestigungsplatte kann auf der gegenüberliegenden Seite des Sensors befestigt sein. Auf diese Weise ist der Sensor vor äußeren mechanischen Einwirkungen geschützt und kann beidseitig befestigt werden, wobei die Funktion des Sensors nicht behindert wird, Anzeigeelemente sichtbar und Bedienelemente des Sensors zugänglich bleiben.

Die Erfindung wird im folgenden beispielsweise anhand der Zeichnung beschrieben; in dieser zeigt:
- Fig. 1: eine teilweise geschnittene Seitenansicht einer an einer vertikalen Stange befestigten Klemmvorrichtung gemäß der Erfindung mit über Haltemittel daran angebrachtem Sensor;
- Fig. 2: einen schematischen Horizontalschnitt der Ausführungsform nach Fig. 1 und
- Fig. 3: eine gegenüber Fig. 1 um 90° gedrehte Seitenansicht des Gegenstandes der Fig. 1 nach Linie III-III in Fig. 1.

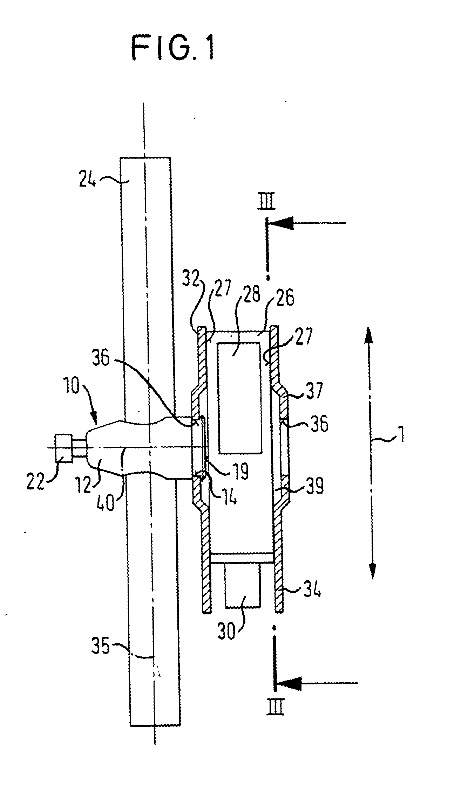

Nach den Fig. 1 bis 3 ist ein Sensor 26 mittels einer Klemmvorrichtung 10 an einer Stange 24 mit kreisförmigem Querschnitt befestigt. Die Klemmvorrichtung 10 weist zwei Schenkel 11 und 12 auf, die an einem Ende über einen Verbindungsbereich 13 einstückig federnd miteinander verbunden sind und am anderen Ende durch einen Spalt 20 voneinander beabstandet sowie mit teilkreisförmigen Hinterschneidungen 14 aufweisenden Ansätzen 15 versehen sind, die über eine radial nach innen weisende Ringstufe 17 an die Schenkel 11, 12 anschließen. An ihrem vom Verbindungsbereich 13 abgewandten Ende sind die Ansätze 15 mit vorzugsweise konischen Einführungsschrägen 19 versehen. Der Verbindungsbereich 13 ist bezüglich der Mittelachse 40 kegelförmig ausgebildet und weist entlang der Mittelachse 40 eine durchgehende Gewindebohrung 23 auf, durch die eine Arretierschraube 22 in Richtung zu den Ansätzen 15 der Schenkel 11, 12 in die Ausnehmung 16 einschraubbar ist.

Zwischen den gegenüberliegenden Innenseiten der Schenkel 11, 12 ist eine Ausnehmung 16 ausgebildet, die im vom Spalt 20 abgewandten Bereich halbkreiszylindrisch geformt ist. In dem dem Spalt 20 zugewandten Bereich weist die Ausnehmung 16 zwei zur Mittelachse 40 spiegelbildliche, schräg zum Spalt 20 verlaufende Schrägflächen 18 auf, die in den Spalt 20 übergehen.

Bei gelöster Arretierschraube 22 kann die Klemmvorrichtung 10 auf der Stange 24 in den Richtungen des Doppelpfeils 1 frei verschoben werden, während die Klemmvorrichtung 10 bei festgedrehter Arretierschraube 22 an der Stange 24 fixiert ist, indem die Schrägflächen 18 gegen die Stange 24 gezogen werden.

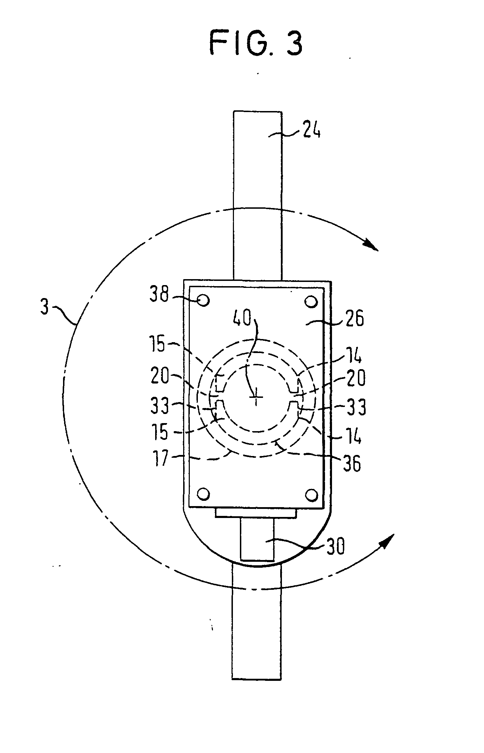

Der als flacher Quader ausgebildete Sensor 26 ist auf beiden Seiten mit gleichen, spiegelbildlich zueinander angeordneten Befestigungsplatten 32 bzw. 34 mittels Verschraubungen 38 (Fig. 3) fest verbunden, die derart dimensioniert sind, daß sie über den Rand des Sensors 26 einschließlich eines Kabelanschlusses 30 etwas überstehen, aber ein beispielsweise für die Erfassung von einfallendem Licht vorgesehenes Fenster 28 des Sensors 26 nicht verdecken sowie Anzeigeelemente sichtbar und Bedienelemente (nicht dargestellt) zugänglich bleiben. Die Befestigungsplatten 32, 34 weisen zentrale Erhebungen 37 auf, die einen geringen Abstand 39 von der zugeordneten Oberfläche des Sensors 26 haben und mit einer Zentralöffnung 36 versehen sind, in die die Ansätze 15 der Schenkel 11, 12 mit den Hinterschneidungen 14 derart eingesetzt sind, daß die Hinterschneidungen 14 hinter die Ränder der Öffnungen 36 greifen und so eine feste, aber lösbare Verbindung zwischen der Klemmvorrichtung 10 und dem Sensor 26 bzw. den ihn haltenden Befestigungsplatten 32, 34 schafft.

Für die Halterung an den Schenkeln 11, 12 würde an sich eine Befestigungsplatte 32 genügen. Die zweite Befestigungsplatte 34 wird jedoch aus Gründen eines mechanischen Schutzes für den Sensor 26 auch dann vorgesehen, wenn dort eine Befestigung nicht erforderlich ist. Die zweite identische Befestigungsplatte 34 erweitert aber auch die Anbringungsmöglichkeiten.

### Die Funktion der beschriebenen Klemmvorrichtung ist wie folgt:

Zunächst wird der die Hinterschneidungen 14 tragende Ansatz 15 unter federndem Zusammendrücken der Schenkel 11, 12 in eine der Öffnungen 36 eingeführt, wobei die Einführungsschräge 19 mitwirkt, worauf der Druck auf die Schenkel 11, 12 reduziert wird und die Schenkel 11, 12 sich aufgrund der rückstellenden Federwirkung des Bereiches 13 wieder voneinander wegbewegen können. Hierbei legen sich die Hinterschneidungen 14 an den Rand der Öffnung 36 an und sorgen für eine vorläufige Verbindung zwischen der Klemmvorrichtung 10 und dem Sensor 26, wobei noch eine Verdrehung des Sensors 26 im Sinne der strichpunktierten Linie 3 in Fig. 3 möglich ist.

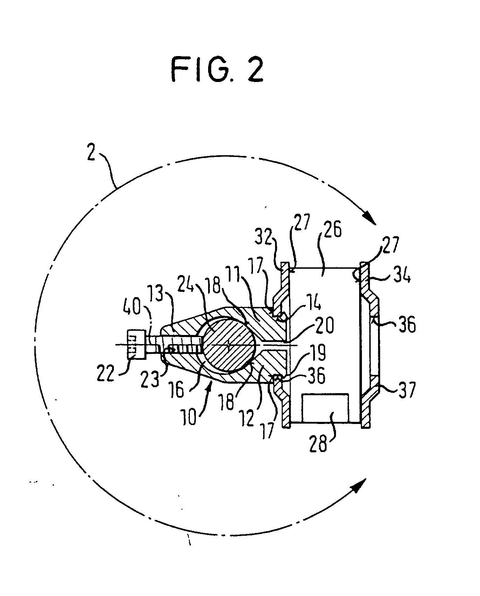

Anschließend wird die kombinierte Sensor-Klemm-Anordnung bei gelöster Arretierschraube 22 auf die Stange 24 aufgeschoben, bis die gewünschte Höhenlage des Sensors 26 erreicht ist. Alsdann wird zunächst die Arretierschraube 22 leicht derart angezogen, daß die Schrägflächen 18 sich an die Stange 24 anlegen und die Klemmvorrichtung 10 mit dem Sensor 26 die eingestellte Höhenlage (1 in Fig. 1) beibehält. Anschließend kann dann durch Verdrehen der Klemmvorrichtung 10 um die Achse 35 (Fig. 1) der Stange 24, d.h. entlang der strichpunktierten Linie 2 in Fig. 2 eine gewünschte Horizontalwinkelposition des Sensors 26 realisiert werden. Weiter kann dann noch die Feinjustierung des Sensors 26 entsprechend einer Verdrehung um die Mittelachse 40 im Sinne der strichpunktierten Linie 3 in Fig. 3 erfolgen.

Sobald der Sensor 26 die gewünschte Position einnimmt, wird die Arretierschraube 22 festgedreht, wobei durch Entlanggleiten der Schrägflächen 18 an dem Außenumfang der Stange 24 die Schenkel 11, 12 zur endgültigen Fixierung der Verbindung zwischen den Hinterschneidungen 14 und dem Rand der Bohrung 36 auseinandergedrückt werden. Gleichzeitig wird auf diese Weise die Klemmvorrichtung 10 endgültig und unverrückbar an der Stange 24 festgelegt. Der Sensor 26 ist nunmehr in der eingestellten Lage fixiert und nach Anschluß des Kabels 30 an ein nicht dargestelltes Speisegerät betriebsbereit. Durch geeignete Schrägstellung und Länge der Schrägflächen 18, die bevorzugt einen Winkel von 30° bis 50°, insbesondere 45° zur Mittelachse 40 aufweisen, kann eine Festlegung der Klemmvorrichtung 10 an Stangen 24 sehr unterschiedlichen Durchmessers erfolgen. Die Stangen 24 müssen lediglich in die Ausnehmung 16 hineinpassen.

Erfindungsgemäß kann der Sensor 26 also bei noch nicht voll festgedrehter Arretierschraube 22 entlang der strichpunktierten Linien 1, 2 und 3 in den Fig. 1 bis 3 positioniert und dann in der eingestellten Lage fixiert werden, wobei mittels einer einzigen Arretierschraube 22 sowohl die feste Verbindung zwischen der Befestigungsplatte 32 und der Klemmvorrichtung 10 als auch zwischen der Klemmvorrichtung 10 und der Stange 24 hergestellt wird.

Die Hinterschneidung kann an ihrem Umfang eine Verzahnung aufweisen, um beim Festziehen der Arretierschraube 22 und dem dadurch hervorgerufenen Spreizen der Schenkel 11, 12 eine besonders feste Verbindung zwischen den Hinterschneidungen 14 und der Befestigungsplatte 32 zu realisieren.

Fig. 3 zeigt eine gegenüber Fig. 1 um 90° gedrehte Seitenansicht der Anordnung mit der erfindungsgemäßen Klemmvorrichtung von Fig. 1. Darin ist zu erkennen, daß die Befestigungsplatten 32, 34 über Verschraubungen 38 miteinander verbunden sind, so daß der Sensor 26 zwischen den Befestigungsplatten 32, 34 eingespannt ist. In der Befestigungsplatte 32 ist die Öffnung 36 durch eine gestrichelte Kreislinie dargestellt. In die Öffnung 36 ist die Klemmvorrichtung 10 mit den freien Enden der Schenkel 11, 12 eingesetzt, wobei die halbkreisförmig ausgebildeten Ansätze 15 mit den Hinterschneidungen 14 ebenfalls durch gestrichelte Linien angedeutet sind. Die Ansätze 15 sind mit den Hinterschneidungen 14 soweit in die Öffnung 36 eingesetzt, daß die Ringstufe 17 der Klemmvorrichtung 10 an der Befestigungsplatte 32 anstößt. Während die Befestigungsplatte 32 an der Klemmvorrichtung 10 noch locker befestigt ist, kann die Befestigungsplatte 32 gegenüber der Klemmvorrichtung 10 um die Mittelachse 40 leicht verdreht werden, so daß der Sensor 26 über die erfindungsgemäße Klemmvorrichtung 10 auch in den durch den gestrichelten Kreisbogen 3 dargestellten Drehrichtungen ausgerichtet werden kann. Damit ist der Sensor 26 über die Klemmvorrichtung 10 gemäß der Erfindung an der Stange 24 in einer vorher bezüglich der Einstellmöglichkeiten 1, 2 und 3 ausgewählten Ausrichtung befestigt.

### Liste der Bezugszeichen

- 10: Klemmvorrichtung
- 11: Schenkel der Klemmvorrichtung
- 12: Schenkel der Klemmvorrichtung
- 13: Verbindungsbereich der Schenkel
- 14: Ansatz mit Hinterschneidung
- 15: Ansatz
- 16: Ausnehmung zwischen den Schenkeln
- 17: Ringstufe
- 18: Schrägflächen der Ausnehmung
- 19: Einführungsschräge
- 20: Spalt zwischen den Schenkeln
- 22: Arretierschraube
- 23: Gewindebohrung
- 24: Stange
- 26: Sensor
- 27: Flachseite
- 28: Sensorfenster
- 30: Kabelanschluß
- 32: Befestigungsplatte
- 33: Abflachung
- 34: Befestigungsplatte
- 35: Achse
- 36: Öffnung in der Befestigungsplatte
- 37: Erhebung
- 38: Verschraubung der Befestigungsplatte
- 39: Zwischenraum
- 40: Mittelachse
- 1: Richtung der Einstellmöglichkeit
- 2: Richtung der Einstellmöglichkeit
- 3: Richtung der Einstellmöglichkeit

## Patentansprüche

1. Kombination aus einer Klemmvorrichtung (10) und einem Gegenstand, insbesondere einem Sensor (26), zum Befestigen und Justieren des Gegenstandes an einer Halterung, insbesondere einer Stange (24), mit zwei, an einem Ende der Klemmvorrichtung (10) miteinander verbundenen gegenüberliegenden Schenkeln (11, 12), zwischen denen eine Ausnehmung (16) ausgebildet ist, wobei am anderen Ende jedes Schenkels (11, 12) ein Ansatz (15) mit einer Hinterschneidung (14) vorgesehen ist, die mit dem Gegenstand (26) bzw. wenigstens einem an diesem befestigten Haltemittel (32, 34) in eine feste Verbindung bringbar ist, wobei die Schenkel (11, 12) an dem einen Ende einstückig über einen Verbindungsbereich (13) federnd miteinander verbunden und am anderen Ende durch einen Spalt (20) voneinander beabstandet sind, und zumindest einem Fixierelement (22), das derart in die Ausnehmung (16) einführbar ist, daß die Schenkel (11, 12) an der Halterung, insbesondere Stange (24) und der Gegenstand (26) an den Schenkeln (11, 12) fixiert sind,
**dadurch gekennzeichnet,**
**daß** die Hinterschneidungen (14) der Ansätze (15) halbkreisförmig ausgebildet sind und bei zueinander gedrückten Schenkeln (11, 12) in eine kreisförmige Öffnung (36) des Gegenstandes oder des Haltemittels (32, 34) einsetzbar sind, und daß die Hinterschneidungen (14) bei entlasteten Schenkeln (11, 12) den Rand der Öffnung (36) hintergreifen.

2. Kombination nach Anspruch 1,
**dadurch gekennzeichnet,**
**daß** das Fixierelement eine in eine durchgehende Gewindebohrung (23) im Verbindungsbereich (13) in Richtung zu den freien Enden der Schenkel (11, 12) in die Ausnehmung (16) eindrehbare Schraube (22) ist.

3. Kombination nach einem der Ansprüche 1 oder 2,
**dadurch gekennzeichnet,**
**daß** die beiden Schenkel (11, 12) mit Muskelkraft federnd zueinander biegbar sind, so daß sich die Breite des Spalts (20) zwischen den anderen Enden der beiden Schenkel (11, 12) verringert und die Hinterschneidungen (14) **dadurch** mit dem Gegenstand (26) bzw. den an ihm befestigten Haltemitteln (32, 34) in Eingriff bringbar sind.

4. Kombination nach einem der vorangehenden Ansprüche,
**gekennzeichnet durch**
einen Sensor (26), der zwei zumindest im wesentlichen ebene Flachseiten (27) aufweist und vorzugsweise beidseits von Befestigungsplatten (32, 34) eingefaßt ist, die eine vorzugsweise zentrale Erhebung (37) aufweisen, derart, daß zwischen der Erhebung (37) und der zugeordneten Flachseite des Sensors (26) ein Zwischenraum (39) vorliegt, und daß in der Erhebung (37) die Öffnung (36) vorgesehen ist, wobei der Zwischenraum (39) ausreichend tief ist, um die Hinterschneidungen (14) in Eingriff mit dem Rand der Öffnung (36) bringen zu können.

5. Kombination nach einem der vorangehenden Ansprüche,
**dadurch gekennzeichnet,**
**daß** die Ausnehmung (16) auf der vom Spalt (20) abgewandten Seite eine im wesentlichen halbkreiszylindrische Form und auf der dem Spalt (20) zugewandten Seite zumindest eine, vorzugsweise zwei schräg zum Spalt (20) verlaufende, vorzugsweise an den Spalt (20) angrenzende Schrägflächen (18) aufweist.

6. Kombination nach einem der vorangehenden Ansprüche,
**dadurch gekennzeichnet,**
**daß** die Ansätze (15) an den anderen Enden beider Schenkel (11, 12) schalenförmig und zueinander spiegelsymmetrisch ausgebildet sind.

7. Kombination nach Anspruch 6,
**dadurch gekennzeichnet,**
**daß** die Ansätze (15) in ihren an den Spalt (20) angrenzenden Bereichen außenseitig abgeflacht sind.

8. Kombination nach einem der Ansprüche 2 bis 7,
**dadurch gekennzeichnet,**
**daß** der Verbindungsbereich (13) zwischen den Schenkeln (11, 12) im wesentlichen kegelförmig ausgebildet ist und die Gewindebohrung (23) für die Schraube (22) entlang der zum Spalt (20) weisenden Mittelachse (40) des Verbindungsbereichs (13) verläuft.

9. Kombination nach einem der vorangehenden Ansprüche,
**dadurch gekennzeichnet,**
**daß** das Fixierelement als Madenschraube (22) ausgebildet ist.

10. Kombination nach einem der Ansprüche 4 bis 9,
**dadurch gekennzeichnet,**
**daß** die Hinterschneidung (14) eine Verzahnung aufweist, um die Festigkeit des Klemmsitzes der Hinterschneidung (14) in der kreisförmigen Öffnung (36) in dem zu befestigenden Gegenstand (26) zu erhöhen.

11. Kombination nach einem der vorangehenden Ansprüche,
**dadurch gekennzeichnet,**
**daß** zumindest ein Ansatz (15) an seinem Einführungsende eine Einführungsschräge (19) aufweist.

## Claims

1. A combination of a clamping device (10) and an article, in particular a sensor (26), for the fastening and adjustment of the article at a holder, in particular at a bar (24), comprising two oppositely disposed limbs (11, 12) which are connected to one another at one end of the clamping device (10) and between which a cut-out (16) is formed, with a nose (15) having an undercut (14) being provided at the other end of each limb (11, 12), said undercut being able to be brought into a fixed connection with the article (26) or with at least one holding means (32, 34) fastened to it, with the limbs (11, 12) being resiliently connected to one another at the one end in one piece via a connection region (13) and being spaced apart from one another by a gap (20) at the other end, and at least one fixing element (22) which can be introduced into the cut-out (16) such that the limbs (11, 12) are fixed to the holder, in particular to the bar (24) and the article (26) is fixed to the limbs (11, 12),
**characterised in that**
the undercuts (14) of the noses (15) are made in semi-circular form and, when the limbs (11, 12) are pressed together, can be inserted into a circular opening (36) of the article or of the holding means (32, 34); and **in that** the undercuts (14) engage behind the rim of the opening (36) when the limbs (11, 12) are relieved.

2. A combination in accordance with claim 1, **characterised in that** the fixing element is a screw (22) which can be screwed into a throughgoing threaded bore (23) in the connection region (13) in the direction towards the free end of the limbs (11, 12) in the cut-out (16).

3. A combination in accordance with any one of the claims 1 or 2, **characterised in that** the two limbs (11, 12) can be bent towards one another resiliently using muscular force such that the width of the gap (20) between the other ends of the two limbs (11, 12) reduces and the undercuts (14) can thereby be brought into engagement with the article (26) or with the holding means (32, 34) fastened to it.

4. A combination in accordance with any one of the preceding claims, **characterised by** a sensor (26) which has two at least substantially planar flat sides (27) and is preferably enclosed at both sides by fastening plates (32, 34) which preferably have a central elevated section (37) such that an intermediate space (39) is disposed between the elevated section (37) and the associated flat side of the sensor (26), and such that the opening (36) is provided in the elevated section (37), with the intermediate space (39) being sufficiently deep to be able to bring the undercuts (14) into engagement with the rim of the opening (36).

5. A combination in accordance with any one of the preceding claims, **characterised in that** the cut-out (16) has a substantially semi-circularly cylindrical shape at the side remote from the gap (20) and at least one sloping surface (18), preferably two sloping surfaces, extending at a slope to the gap (20) and preferably adjacent to the gap (20) at the side facing the gap (20).

6. A combination in accordance with any one of the preceding claims, **characterised in that** the noses (15) are made in shell shape and are made in specular symmetry with one another at the other ends of both limbs (11, 12).

7. A combination in accordance with claim 6, **characterised in that** the noses (15) are flattened at the outer side in their regions adjacent to the gap (20).

8. A combination in accordance with any one of the claims 2 to 7, **characterised in that** the connection region (13) between the limbs (11, 12) is made substantially conically and the threaded bore (23) for the screw (22) extends along the centre axis (40) of the connection region (13) facing the gap (20).

9. A combination in accordance with any one of the preceding claims, **characterised in that** the fixing element is made as a grub screw (22).

10. A combination in accordance with any one of the claims 4 to 9, **characterised in that** the undercut (14) has a toothed arrangement to increase the strength of the clamping fit of the undercut (14) in the circular opening (36) in the article (26) to be fastened.

11. A combination in accordance with any one of the preceding claims, **characterised in that** at least one nose (15) has an introduction slope (19) at its introduction end.

## Revendications

1. Combinaison d'un dispositif de serrage (10) et d'un objet, en particulier d'un capteur (26) pour fixer et ajuster l'objet sur une monture, en particulier sur une tige (24), comportant deux branches (11, 12) opposées reliées l'une à l'autre à une extrémité du dispositif de serrage (10), entre lesquelles est réalisé un évidement (16), et à l'autre extrémité de chaque branche (11, 12) est prévu un talon (15) avec une contre-dépouille (14) qui peut être amenée dans une liaison solidaire avec l'objet (26) ou avec au moins un moyen de retenue (32, 34) fixé sur celui-ci, les branches (11, 12) étant reliées l'une à l'autre à l'une extrémité d'un seul tenant de manière élastique via une zone de liaison (13) et étant espacées l'une de l'autre à l'autre extrémité par une fente (20), et comportant au moins un élément de fixation (22) qui peut être introduit dans l'évidement (16) de telle sorte que les branches (11, 12) sont fixées sur la monture, en particulier sur la tige (24) et l'objet (26) est fixé sur les branches (11, 12),
**caractérisée en ce que**
les contre-dépouilles (14) des talons (15) sont réalisées en forme de demi-cercles et peuvent être insérées dans une ouverture circulaire (36) de l'objet ou du moyen de retenue (32, 34) lorsque les branches (11, 12) sont pressées l'une vers l'autre, et **en ce que** les contre-dépouilles (14) s'engagent derrière le bord de l'ouverture (36) lorsque les branches (11, 12) sont détendues.

2. Combinaison selon la revendication 1,
**caractérisée en ce que**
l'élément de fixation est une vis (22) qui peut être vissée dans l'évidement (16) dans un perçage taraudé traversant (23) dans la zone de liaison (13) en direction des extrémités libres des branches (11, 12).

3. Combinaison selon l'une des revendications 1 ou 2,
**caractérisée en ce que**
les deux branches (11, 12) peuvent être pliées par force musculaire avec effet de ressort l'une vers l'autre de telle sorte que la largeur de la fente (20) entre les autres extrémités des deux branches (11, 12) se réduit et que par conséquent, les contre-dépouilles (14) peuvent être amenées en engagement avec l'objet (26) ou avec les moyens de retenue (32, 34) fixés sur celui-ci.

4. Combinaison selon l'une des revendications précédentes,
**caractérisée par**
un capteur (26) qui présente deux côtés plats (27) au moins sensiblement plans et qui est de préférence encastré des deux côtés par des plaques de fixation (32, 34) qui présentent de préférence un relief central (37) de telle sorte qu' il y a un espace intermédiaire (39) entre le relief (37) et le côté plat associé du capteur (26), et en ce que dans le relief (37) est prévue l'ouverture (36), l'espace intermédiaire (39) étant suffisamment profond pour pouvoir amener les contre-dépouilles (14) en engagement avec le bord de l'ouverture (36).

5. Combinaison selon l'une des revendications précédentes,
**caractérisée en ce que**
l'évidement (16) sur la face détournée de la fente (20) présente une forme sensiblement cylindrique en demi-cercle et, sur la face tournée vers la fente (20), au moins une, de préférence deux surfaces obliques (18) s'étendant en oblique par rapport à la fente (20) et de préférence adjacentes à la fente (20).

6. Combinaison selon l'une des revendications précédentes,
**caractérisée en ce que**
à l'autre extrémité des deux branches (11, 12), les talons (15) sont réalisés en forme de coque et symétriquement l'une par rapport à l'autre.

7. Combinaison selon la revendication 6,
**caractérisée en ce que**
les talons (15) sont aplatis sur la face extérieure dans leurs régions adjacentes de la fente (20).

8. Combinaison selon l'une des revendications 2 à 7,
**caractérisée en ce que**
la zone de liaison (13) entre les branches (11, 12) est réalisée sensiblement en forme de cône et le perçage taraudé (23) pour la vis (22) s'étend le long de l'axe médian (40), tourné vers la fente (20), de la zone de liaison (13).

9. Combinaison selon l'une des revendications précédentes,
**caractérisée en ce que**
l'élément de fixation est réalisé sous forme de vis sans tête (22).

10. Combinaison selon l'une des revendications 4 à 9,
**caractérisée en ce que**
la contre-dépouille (14) présente une denture pour augmenter la fermeté de l'ajustage par serrage de la contre-dépouille (14) dans l'ouverture (36) circulaire dans l'objet (26) à fixer.

11. Combinaison selon l'une des revendications précédentes,
**caractérisée en ce que**
au moins un talon (15) présente à son extrémité d'introduction une pente d'introduction (19).
